# FASCICULE DE BREVET EUROPEEN

(11) **EP 3 644 146 B1**
(45) Date de publication et mention de la délivrance du brevet: **10.03.2021**
(21) Numéro de dépôt: 19203871.9
(22) Date de dépôt: 17.10.2019
(51) Int. Cl.: G06F 21/55, G05B 19/042, G06F 21/56, H04L 29/06

(54) **DISPOSITIF D'ENREGISTREMENT D'INTRUSION INFORMATIQUE**
COMPUTER INTRUSION RECORDING GERÄT
COMPUTER INTRUSION RECORDING DEVICE

(30) Priorité: 26.10.2018 FR 1859968
(43) Date de publication de la demande: 29.04.2020
(73) Titulaire: Serenicity, 42000 Saint-Etienne (FR)
(72) Inventeur: Veyre, Fabienne, 42000 Saint-Etienne (FR); Veyre, Thierry, 42000 Saint-Etienne (FR); Koszyk, Fabrice, 42610 Saint-Romain-le-Puy (FR)
(74) Mandataire: Cabinet Laurent & Charras

(56) Documents cités:
- EP-A1- 3 316 550
- WO-A1-02/098100
- WO-A1-2018/044410
- US-A1- 2014 359 708
- US-A1- 2017 208 092
- US-A1- 2017 339 186

## Description

### DOMAINE TECHNIQUE

L'invention concerne un dispositif d'enregistrement d'intrusion informatique, c'est-à-dire un dispositif permettant d'enregistrer à son insu les actions d'un pirate informatique lors d'une intrusion informatique.

L'invention trouve une application particulièrement avantageuse pour identifier l'identité et les moyens d'actions d'un ou plusieurs pirates informatiques de sorte à activer les contre-mesures efficaces aux actions des pirates informatiques.

### ART ANTERIEUR

Depuis la dernière décennie, une virtualisation des actes criminels a été constatée. En effet, les délinquants utilisent de plus en plus les outils informatiques pour effectuer divers actes délictuels sur des serveurs informatiques afin de limiter les risques d'identification ou d'arrestation. Par exemple, des pirates informatiques pénètrent quotidiennement sur des serveurs informatiques d'entreprise pour appliquer des crypto-virus sur les données et demander des rançons en échanges des clés de décryptage des données. D'autres actes délictuels connus concernent la vente d'armes, de stupéfiants ou l'utilisation de cartes bancaires volées. Il existe certainement d'autres actes criminels qui sont perpétrés sur des serveurs piratés afin de limiter les risques d'identification ou d'arrestation.

Pour éviter que ces actes délictuels ne soient réalisés sur un serveur spécifique d'une entreprise, les entreprises disposent d'un grand nombre de techniques pour bloquer l'accès des pirates informatique à ces serveurs.

Cependant, lorsqu'un pirate informatique a réussi à déjouer les barrières disposées à l'entrée d'un serveur informatique, il est souvent très peu risqué pour lui d'effectuer des actes criminels. Si bien que les actions des pirates sur les serveurs informatiques sont assez méconnues. Il s'ensuit qu'il est difficile de développer des contre-mesures efficaces aux actions des pirates informatiques.

Il existe donc un besoin de compréhension des techniques employées par les pirates informatiques pour réaliser des actes délictuels sur des serveurs piratés.

Les seules techniques existantes pour comprendre l'activité d'un pirate informatique consistent à analyser les informations contenues dans le journal d'activités du serveur. Cependant, ces techniques sont souvent inefficaces car les pirates informatiques possèdent des outils permettant de supprimer les informations contenues dans ce journal d'activités.

Par ailleurs, il existe des solutions pour enregistrer les sessions de connexion des utilisateurs distants se connectant sur un serveur d'une entreprise. Par exemple, les solutions développés par les sociétés RUBYCAT-Labs® et Systancia® permettent d'enregistrer les sessions de connexion des utilisateurs ayant les droits d'accès à distance à un serveur de sorte à associer des dysfonctionnements du serveur à un utilisateur particulier. Ces solutions permettent, suite à un sinistre, de rechercher la responsabilité d'un utilisateur interne ou externe, par exemple un employé du service informatique ou un sous-traitant externe. Elles sont souvent adosser à des contrats de responsabilité civile professionnelle impliquant la présence d'une information selon laquelle les activités de l'utilisateur sont enregistrées. Ainsi, ces solutions ne sont pas efficaces pour tracer l'activité d'un pirate sur un serveur informatique car les pirates informatiques détecteraient trop rapidement la présence de moyens d'enregistrement.

Un autre état de l'art antérieur est donné par le document US 2017/339186 A1 qui décrit l'utilisation d'un ou plusieurs serveurs de Honeyspot ("pot de miel") pour sécuriser un cloud contre des attaques hostiles, en traitant le trafic réseau associé aux adresses IP attribuées aux serveurs de HoneySpot.

Le problème technique objectif que ce propose de résoudre l'invention est d'enregistrer les techniques employées par les pirates informatiques pour réaliser des actes délictuels sur des serveurs piratés.

### EXPOSE DE L'INVENTION

Pour répondre à ce problème technique, l'invention propose d'utiliser un serveur servant de leurre associé à un serveur d'enregistrement configuré pour enregistrer les actions d'un pirate informatique à son insu.

La présente invention est issue d'une découverte selon laquelle les outils permettant aux pirates informatiques d'analyser l'activité d'un serveur ne permettent pas de détecter la présence d'une redirection du port d'écoute du serveur leurre.

Ainsi, il est possible de rediriger le port d'écoute du serveur servant de leurre vers un serveur configuré pour enregistrer les actions du pirate informatique. Cette technique de redirection de port est appelée « *man in the middle* » dans la littérature anglo-saxonne et permet d'intercepter les actions entre deux parties qui pensent communiquer directement entre elles.

Contrairement à un serveur réel dans lequel les moyens d'enregistrement sont visibles pour un pirate informatique, ce serveur leurre ne met pas en œuvre de service réellement utilisé, tel qu'un service d'enregistrement. Ainsi, un pirate informatique ne peut pas détecter que ces actions sont enregistrées avec les outils classiques dont il dispose.

En outre, ce serveur servant de leurre est préférentiellement distant du système informatique d'une entreprise sensible et il ne contient pas de donnée sensible. Il est donc plus sécurisé d'enregistrer une intrusion sur ce serveur leurre que sur un serveur réellement utilisé.

L'invention concerne donc un dispositif d'enregistrement d'intrusion informatique comportant un serveur d'applications servant de leurre dans lequel un service de contrôle à distance est activé ; ledit serveur d'applications étant associé à au moins une adresse Internet destinée à être référencée sur un système de noms de domaine; ledit service de contrôle à distance étant accessible sur un port d'écoute du serveur d'applications de sorte à permettre l'établissement d'une connexion entre ledit serveur d'applications et un ordinateur distant.

L'invention se caractérise en ce que ledit serveur d'applications comporte un port virtuel associé au service de contrôle à distance sur ledit système de noms de domaine et accessible depuis l'adresse Internet du serveur d'applications et en ce que ledit dispositif d'enregistrement comporte un serveur d'enregistrement configuré pour capter les communications transmisses sur le port virtuel, enregistrer ces communications, et retransmettre ces communications sur le port d'écoute du serveur d'applications.

L'invention permet d'enregistrer les actions d'un pirate informatique à son insu. Pour ce faire, le serveur d'applications servant de leurre est facilement accessible pour un pirate informatique.

Lorsque le pirate informatique cherche à attaquer une société particulière, il détecte l'adresse du servant de leurre par l'association existante sur le système de noms de domaine.

De préférence, le serveur servant de leurre correspond à un serveur fonctionnant avec un système d'exploitation de type Microsoft® car les pirates informatiques ont souvent un préjugé selon lequel un serveur Microsoft® serait moins protégé qu'un autre type de serveur, par exemple un serveur GNU/Linux. Ainsi, si un pirate informatique souhaite attaquer une société particulière et qu'il découvre l'utilisation d'un serveur Microsoft®, il est incité à poursuivre son attaque.

En utilisation les techniques d'analyse du serveur servant de leurre, il détecte que le service de contrôle à distance est activé. Au sens de l'invention, le service de contrôle à distance peut correspondre au service RDP pour « *Remote Desktop Protocol* » dans la littérature anglo-saxonne mais tout autre type de service de contrôle à distance peut être utilisé sans changer l'invention.

Pour faciliter le travail du pirate informatique, ce service de contrôle à distance est préférentiellement accessible depuis le port par défaut, par exemple le port TCP 3389 pour le cas du service RDP. De préférence, ce service de contrôle à distance est très peu sécurisé, par exemple en utilisant les identifiants de connexion par défaut (admin, admin ...). Les pirates informatiques utilisent classiquement des « bots » configurés pour tester ces identifiants de connexion par défaut.

Le terme « bot » est la contraction du terme « robot ». Au sens de l'invention, un bot est un agent logiciel automatique ou semi-automatique qui interagit avec au moins un serveur informatique à la manière d'un programme client utilisé par un humain.

Cette interaction entre le serveur et le bot est facilitée par l'utilisation du réseau Internet et du protocole de transmission et de contrôle des adresses Internet, plus connu sous l'abréviation TCP/IP pour « Transmission Control Protocol / Internet Protocol » dans la littérature anglo-saxonne.

Ainsi, avec le serveur servant de leurre et ce service de contrôle à distance peu sécurisé, le pirate informatique doit pouvoir prendre facilement le contrôle du serveur leurre. Lors de ce contrôle, il pourra vérifier les services utilisés sur le serveur servant de leurre.

Pour tromper le pirate informatique, le serveur servant de leurre peut intégrer des fichiers factices et des programmes réalisant des activités factices de sorte que le pirate informatique ait la conviction d'avoir pénétré un serveur informatique réellement utilisé.

Comme il s'agit d'un serveur leurre, personne n'a vocation à se connecter à distance sur le serveur. Ainsi, toute connexion peut être assimilée à une intrusion par un pirate informatique. A chaque connexion, le serveur d'enregistrement procède à l'enregistrement des actions du pirate informatique à son insu par une redirection du port d'écoute du service de contrôle à distance. Pour ce faire, le port d'écoute du service de contrôle à distance est modifié et le port d'accès au serveur leurre correspond à un port virtuel dont le flux est capté par le serveur d'enregistrement avant d'être retransmis sur le port d'écoute du service de contrôle à distance.

Les actions enregistrées peuvent être stockées sous la forme d'un journal d'activité du pirate informatique intégrant toutes les commandes utilisées par le pirate informatique. En outre, le service de contrôle à distance permettant la commande du serveur leurre par l'intermédiaire d'une interface graphique, l'invention réalise un enregistrement vidéo des actions réalisées sur une interface graphique du service de contrôle à distance du serveur d'applications. L'obtention d'une telle vidéo est particulièrement avantageuse car elle permet de rendre compte très efficacement des actions du pirate informatique et, le cas échéant, d'identifier le pirate informatique. Ainsi, une vidéo illustrant les actions d'un pirate informatique sur un serveur leurre peut constituer une preuve efficace des agissements frauduleux du pirate informatique.

Outre cette vidéo, il est également possible d'utiliser des moyens d'identification des actions réalisées sur les communications captées par le serveur d'enregistrement. Par exemple, il est possible de déterminer si une attaque vise l'application d'un crypto-virus ou l'utilisation frauduleuse de cartes de crédit. Ce faisant, il est possible de quantifier le nombre et le type d'attaque afin d'appliquer les contre-mesures efficaces.

Par exemple, s'il est avéré que les pirates informatiques utilisent souvent le même site marchand en ligne pour acheter des objets avec des cartes de crédit volées, il est possible de contacter ce site marchand afin qu'il améliore sa politique de vérification des cartes de crédit. De même, si les pirates informatiques qui utilisent des crypto-virus utilisent souvent le même virus disponible à la même adresse internet, il est possible de chercher à fermer l'accès à ce crypto-virus.

L'utilisation d'un serveur d'enregistrements invisible pour le pirate informatique permet également d'utiliser une identification des informations de connexion transmisses par l'ordinateur distant. L'identification des informations de connexion peut être réalisée par un programme, appelé « *keylogger* » dans la littérature anglo-saxonne, chargé d'enregistrer les frappes de touches du clavier et de les enregistrer.

En captant les touches du clavier, il est possible d'obtenir les informations de connexion utilisées par le pirate informatique pour se connecter depuis le serveur servant de leurre y compris ses mots de passe pour une connexion à un serveur sécurisé de messagerie. En outre, il est possible de limiter les fonctionnalités du service de contrôle à distance de sorte à contraindre le pirate informatique à se connecter à un espace de stockage personnel pour télécharger des outils malveillants. Par exemple, les fonctions copier/coller et de remontée de lecteur local via le protocole « bureau à distance » peuvent être désactivées pour imposer au pirate informatique de télécharger ses outils malveillants.

En captant les informations de connexion lorsque le pirate informatique télécharge ses outils malveillants, il est ainsi possible d'identifier un pirate informatique à son insu. De préférence, le port d'écoute du service de contrôle à distance n'est pas exposé à Internet, ce qui rend le leurre indétectable depuis Internet. La présente invention est définie par la revendication indépendante jointe à laquelle il convient de se référer. Des caractéristiques avantageuses sont exposées dans les revendications dépendantes.

### DESCRIPTION SOMMAIRE DES FIGURES

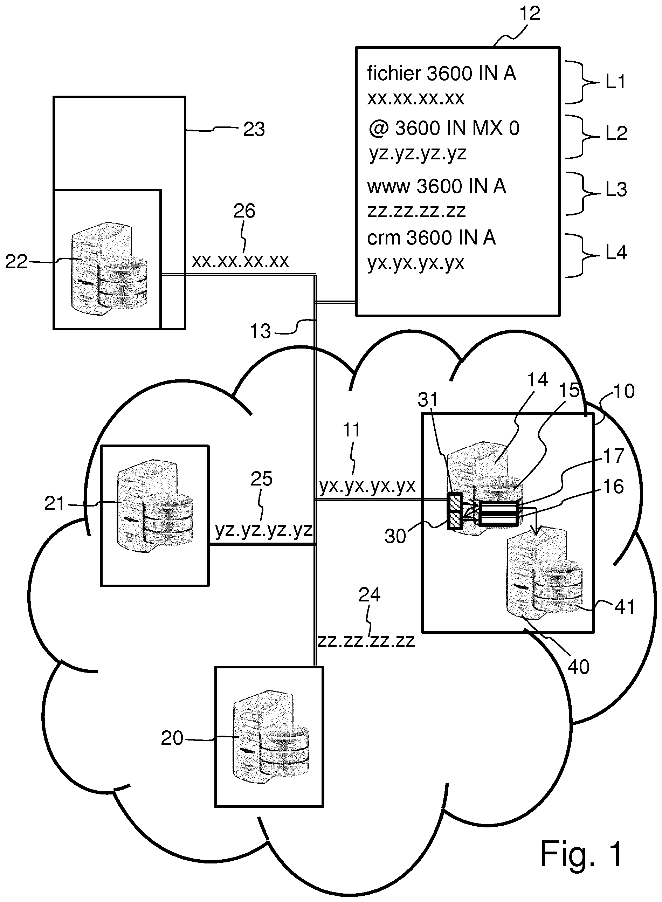

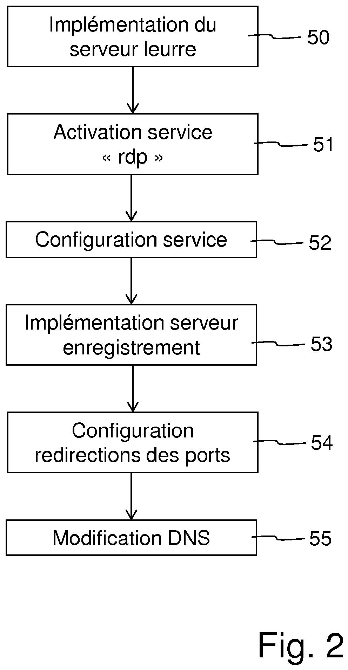

La manière de réaliser l'invention ainsi que les avantages qui en découlent, ressortiront bien du mode de réalisation qui suit, donné à titre indicatif mais non limitatif, à l'appui des figures annexées dans lesquelles les figures 1 et 2 représentent :
- Figure 1 : une représentation schématique d'un système informatique muni d'un dispositif d'enregistrement d'intrusion informatique selon un mode de réalisation de l'invention ; et
- Figure 2 : un ordinogramme des étapes de création du dispositif d'enregistrement d'intrusion informatique de la figure 1.

### DESCRIPTION DETAILLEE DE L'INVENTION

Dans la description qui suit, les adresses Internet sont présentées sur une forme correspondant au protocole IPv4, c'est-à-dire la quatrième version du protocole Internet avec quatre séries de chiffres reliées par des points. En variante, d'autres protocoles peuvent être utilisés sans changer l'invention, notamment le protocole IPv6.

La figure 1 illustre un système informatique d'une société **23** intégrant un dispositif d'enregistrement d'intrusion informatique **10.** Le système informatique comporte un serveur **20** hébergeant un site Internet de la société **23** et un serveur **21** gérant les messages électroniques de la société **23.** Ces deux serveurs **20-21** sont hébergés chez des prestataires de la société **23** et ils ne sont pas situés dans les locaux de la société **23.**

La société **23** comporte également un serveur de fichiers **22** hébergé et géré en interne de la société **23.** En utilisant le réseau Internet **13,** le serveur **20,** hébergeant le site Internet, est accessible depuis l'adresse Internet **24** zz.zz.zz.zz. Le serveur **21,** gérant les messages électroniques, est accessible depuis l'adresse Internet **25** yz.yz.yz.yz et le serveur de fichiers **22** est accessible depuis l'adresse Internet **26** xx.xx.xx.xx.

Ces acteurs sont référencés dans un système de noms de domaine **12** dans lequel une ligne **L1** concerne la définition du serveur de fichiers **22,** une ligne **L2** concerne la définition du serveur de messagerie **21** et une ligne **L3** concerne la définition du serveur d'hébergement du site Internet **22.**

Cette structure classique est décrite uniquement à titre d'exemple. Dans cet exemple, l'invention est présentée dans le contexte de la sécurité numérique d'une société **23.** En variante, une telle sécurité informatique peut être mise en œuvre pour protéger tous types de système informatique, par exemple les systèmes informatiques présents dans les collectivités.

Outre ces éléments classiques d'un système informatique, l'invention propose un dispositif d'enregistrement d'intrusion informatique **10** comportant un serveur d'applications **14** servant de leurre accessible depuis une adresse Internet **11** yx.yx.yx.yx et associé à un serveur d'enregistrement **40** configuré pour enregistrer les intrusions informatiques sur le serveur d'applications **14.**

Le procédé de création de ce dispositif d'enregistrement d'intrusion informatique **10** est décrit en référence à la figure 2. Dans une première étape **50,** le serveur d'applications **14** est créé pour être accessible depuis une adresse Internet **11.** De préférence, un serveur Microsoft® est utilisé. En outre, l'adresse Internet **11** est choisie de sorte à correspondre à une situation géographique dans le même pays, voir dans la même région que la société **23.**

Lorsque le serveur d'applications **14** est créé, il est paramétré dans une étape **51** en activant des services **15** souvent cibles de piratage.

Selon l'invention, au moins un service activé **15** est un service **16** permettant de prendre un contrôle à distance du serveur d'applications **14,** tels que le service « RDP ». En activant ce service de contrôle à distance **16,** un code d'accès est demandé. Il est préférable de prendre un code d'accès particulièrement peu robuste pour ce service de contrôle à distance **16,** par exemple un code par défaut de type « admin/admin ».

Lorsque le service de contrôle à distance **16** est activé, il convient de le configurer. A cet effet, dans une étape **52,** le port d'accès par défaut à ce service de contrôle à distance **16** est préférentiellement modifié de sorte que le service de contrôle à distance **16** soit associé à un port d'écoute **30,** par exemple en utilisant le port d'écoute **30** TCP 3390 au lieu du port par défaut TCP 3389.

Ensuite, il est possible de modifier les fonctionnalités du service de contrôle à distance **16** pour contraindre les actions du pirate informatique, par exemple en supprimant la possibilité de réaliser des copier/coller et des remontées de lecteur local via le protocole « bureau à distance » dans l'interface graphique du service de contrôle à distance **16.**

Le but de l'invention est d'enregistrer les actions réalisées par le pirate informatique sur le serveur d'applications **14.** Pour ce faire, un serveur d'enregistrement **40** est implémenté dans une étape **53.** Ce serveur d'enregistrement **40** est associé à une base de données **41** de sorte à stocker les actions réalisées par le pirate informatique sur un serveur indépendant du serveur d'applications **14.**

Pour réaliser cet enregistrement, un service est activé sur le serveur d'enregistrement **40** et l'enregistrement peut être réalisé sous la forme d'un journal d'activité du pirate informatique intégrant toutes les commandes utilisées par le pirate informatique.

Selon l'invention, le serveur d'enregistrement **40** procède à un enregistrement vidéo des actions réalisées sur une interface graphique du service de contrôle à distance **16** du serveur d'applications **14.** Outre l'enregistrement, le serveur d'enregistrement **40** peut mettre en œuvre une identification des actions du pirate informatique ou des informations de connexion utilisées par le pirate informatique.

Lorsque le serveur d'enregistrement **40** est opérationnel, le serveur d'applications **14** peut être modifié pour créer un port virtuel **31** dans une étape **54.** De préférence, ce port virtuel **31** correspond au port par défaut du service de contrôle à distance **16,** par exemple le port TCP 3389. Un service fantôme **17** est ensuite créé sur le serveur d'applications **14** pour faire le lien entre ce serveur d'applications **14** et le serveur d'enregistrement **40.** Ce service fantôme 17 écoute sur le port TCP 3389, envoi le flux vidéo sur le serveur d'enregistrement **40** et rédige le flux initial sur le port TCP 3390 du serveur d'application **14.** Ce service **17** est appelé service fantôme car il ne doit pas être détecté par le pirate informatique. Pour ce faire, il peut être masqué ou posséder un nom générique.

Le service fantôme **17** ne modifie pas le contenu des informations arrivant sur le port virtuel **31** avant de les retransmettre sur le port d'écoute **30** si bien que le pirate informatique retrouve une expérience utilisateur traditionnel.

Pour que ce serveur d'applications **14** servant de leurre soit facilement détectable par un pirate informatique, une étape **55** consiste à modifier le système de noms de domaine **12** pour indiquer la présence du serveur d'application **14** sur le système d'information. Pour ce faire, une ligne **L4** est ajoutée au système de noms de domaine **12** en référençant l'adresse Internet **11** du serveur d'applications **14** servant de leurre.

Dans la description du serveur d'applications **14** servant de leurre, il peut être défini que le serveur d'applications **14** correspond à un serveur Microsoft® et que le serveur d'applications **14** est utilisé avec des services **15** de contrôle à distance.

Dans l'exemple de la figure 1, la ligne **L4** est définie en utilisant la description « crm » pour décrire l'activité du serveur d'applications **14.** Cette description « crm » correspond à un serveur gestionnaire de relation client, pour « *Customer Relationship Management* » dans la littérature anglo-saxonne. Ce type de serveur centralise un grand nombre d'informations sur les clients et les produits d'une société afin de créer une offre personnalisée à chaque client en fonction de ses besoins. Un serveur gestionnaire de relation client est souvent implémenté sur un serveur Microsoft® avec un nombre de services importants, notamment des services permettant un accès à distance.

Ainsi, un pirate informatique qui détecte cette description « crm » dans le système de noms de domaine **12** devrait être très incité à tenter une intrusion sur le serveur associé à cette description « crm ».

En outre, dans la définition du système de noms de domaine **12,** il est possible d'associer les ports d'accès à chaque service **15** du serveur d'applications **14.** En indiquant que le port d'accès au service de contrôle à distance **16** correspond au port virtuel **31,** le pirate informatique tentera d'accéder au service de contrôle à distance **16** uniquement par le port virtuel **31.**

Ainsi, seul le port virtuel **31** est exposé sur Internet pour le service de contrôle à distance **16** et une analyse distante de ce service avec des outils de type Telnet renvoi une réponse identique au port par défaut du service de contrôle à distance **16.** Le port d'écoute **30** du service de contrôle à distance **16** n'est donc pas exposé sur Internet, ce qui rend le leurre indétectable depuis Internet.

La retransmission du flux vidéo sur le serveur d'enregistrement **40** par le service fantôme **17** permet donc d'enregistrer les actions du pirate informatique sur le serveur d'enregistrement **40** à l'insu du pirate informatique.

L'invention permet ainsi d'amener un pirate informatique à pénétrer sur un serveur d'applications **14** servant de leurre afin d'enregistrer ces agissements. Cette démarche est à l'opposé des démarches existantes qui visent à limiter les possibilités d'actions des pirates informatiques. En effet, dans la démarche de l'invention, le pirate informatique est incité à perpétrer des actes de piratage dans un contexte contrôlé et propice à le démasquer.

## Revendications

1. Dispositif d'enregistrement d'intrusion informatique (10) comportant un serveur d'applications (14) servant de leurre dans lequel un service de contrôle à distance (16) est activé ; ledit serveur d'applications (14) étant associé à au moins une adresse Internet (11) destinée à être référencée sur un système de noms de domaine (12) ; ledit service de contrôle à distance (16) étant accessible sur un port d'écoute (30) du serveur d'applications (14) de sorte à permettre l'établissement d'une connexion entre ledit serveur d'applications (14) et un ordinateur distant ;
ledit serveur d'applications (14) comportant un port virtuel (31) associé au service de contrôle à distance (16) sur ledit système de noms de domaine (12) et accessible depuis l'adresse Internet (11) du serveur d'applications (14) ;
ledit dispositif d'enregistrement (10) comportant un serveur d'enregistrement (40) configuré pour capter les communications transmises sur le port virtuel (31), enregistrer ces communications, et retransmettre ces communications sur le port d'écoute (30) du serveur d'applications (14).
***caractérisé en ce que*** ledit serveur d'enregistrement (40) est configuré pour réaliser un enregistrement vidéo des actions réalisées sur une interface graphique du service de contrôle à distance (16) du serveur d'applications (14).

2. Dispositif selon la revendication 1, *dans lequel* ledit serveur d'enregistrement (40) comporte des moyens d'identification des actions réalisées sur les communications captées sur le port virtuel (31).

3. Dispositif selon la revendication 2, *dans lequel* ledit serveur d'enregistrement (40) intègre des moyens d'identification des informations de connexion transmisses par l'ordinateur distant sur le port virtuel (31).

4. Dispositif selon l'une des revendications 1 à 3, *dans lequel* ledit service de contrôle à distance (16) dudit serveur d'applications (14) comporte des fonctionnalités limitées intégrant l'impossibilité de réaliser des copier/coller entre l'ordinateur distant et ledit serveur d'application (14).

5. Dispositif selon l'une des revendications 1 à 2. 4, *dans lequel* le port d'écoute (30) du service de contrôle à distance (16) dudit serveur d'applications (14) correspond au port TCP 3390 alors que le port virtuel (31) associé au service de contrôle à distance (16) sur ledit système de noms de domaine (12) correspond au port TCP 3389.

6. Dispositif selon l'une des revendications 1 à 5, *dans lequel* le port d'écoute (30) du service de contrôle à distance (16) n'est pas exposé à Internet.

## Patentansprüche

1. Vorrichtung zur Protokollierung unerlaubten Eindringens (10), die einen Anwendungsserver (14) enthält, der als Lockmittel dient, in dem ein externer Überwachungsdienst (16) aktiviert wird; dieser Anwendungsserver (14) ist mit mindestens einer Internetadresse (11) verbunden, die in einem Domain-Namenssystem (12) verzeichnet ist. Der erwähnte externe Überwachungsdienst (16) ist über einen empfangenden Anschluss (30) des Anwendungsservers (14) verbunden, so dass die Herstellung einer Verbindung zwischen diesem Anwendungsserver (14) und einem Remote- Computer möglich ist,.
dieser Anwendungsserver (14) enthält dabei einen virtuellen Port (31), verbunden mit dem externen Überwachungsdienst (16) auf diesem Domain-Namenssystem (12), der über die Internetadresse (11) des Anwendungsservers (14) erreichbar ist:
die erwähnte Protokollierungsvorrichtung (10) enthält einen Protokollierungsserver (40), konfiguriert zum Auffangen der über den virtuellen Port (31) übermittelten Verbindungen.
Protokollierung der Verbindungen und Weiterleitung der Verbindungen über den empfangenden Anschluss (30) des Anwendungsservers 14),
***dadurch gekennzeichnet, dass*** dieser Protokollierungsserver (40) zur Anfertigung einer Videoaufzeichnung der ausgeführten Aktionen, die auf einem Grafikinterface des externen Überwachungsdienstes (16) des Anwendungsservers (14) durchgeführt werden, konfiguriert ist.

2. Vorrichtung nach Anspruch 1, *bei der* dieser Protokollierungsserver (40) Mittel zur Identifikation der Aktionen enthält, die bei den auf dem virtuellen Port (31) aufgefangenen Verbindungen durchgeführt wurden.

3. Vorrichtung nach Anspruch 1, *bei der* dieser Protokollierungsserver (40) Mittel zur Identifikation der Verbindungsinformationen integriert, die vom Remotecomputer, an den virtuellen Port (31) übersandt wurden.

4. Vorrichtung nach einem der vorangehenden Ansprüche 1 bis 3, *bei der* der erwähnte externe Überwachungsdienst (16) dieses Anwendungsservers (14) begrenzte Funktionalitäten enthält, die die Unmöglichkeit zur Ausführung von Kopieren/ Einfügen zwischen dem Remotecomputer und dem Anwendungsserver (14) integrieren.

5. Vorrichtung nach einem der vorangehenden Ansprüche 1 bis 4 *bei der* der empfangende Anschluss (30) des externen Überwachungsdienstes (16) dieses Anwendungsservers (14) dem Port TCP 3390 entspricht, während der virtuelle Port (31), der mit dem externen Überwachungsdienst (16) auf diesem Domain-Namenssystem (12) verknüpft ist, dem Port TCP 3389 entspricht.

6. Vorrichtung nach einem der vorangehenden Ansprüche 1 bis 5 *bei der* der empfangende Anschluss (30) des externen Überwachungsdienstes (16) nicht mit dem Internet verbunden ist.

## Claims

1. Recording apparatus (10) for recording computer intrusion, which recording apparatus includes an applications server (14) serving as a decoy in which a remote control service (16) is activated; said applications server (14) being associated with at least one Internet address (11) to be referenced on a domain names system (12); said remote control service (16) being accessible on a listening port (30) of the applications server (14) so as to enable a connection to be set up between said applications server (14) and a remote computer;
said applications server (14) including a virtual port (31) associated with the remote control service (16) on said domain names system (12) and accessible from the Internet address (11) of the applications server (14);
said recording apparatus (10) including a recording server (40) configured to capture the communications transmitted to the virtual port (31), record said communications, and forward said communications to the listening port (30) of the applications server (14).
said recording apparatus being **characterized in that** said recording server (40) is configured to make video recordings of the actions performed on a graphics interface of the remote control service (16) of the applications server (14).

2. A device according to claim 1, wherein said recording server (40) includes identification means for identifying the actions performed on the communications captured on the virtual port (31).

3. A device according to claim 2, wherein said recording server (40) incorporates identification means for identifying connection information transmitted by the remote computer to the virtual port (31).

4. Apparatus according to any one of claims 1 to 3, wherein said remote control service (16) of said applications server (14) includes limited functionality features incorporating the impossibility of copying and pasting between the remote computer and said applications server (14).

5. Apparatus according to any one of claims 1 to 4, wherein the listening port (30) of the remote control service (16) of said applications server (14) corresponds to the Transmission Control Protocol (TCP) port 3390 while the virtual port (31) associated with the remote control service (16) on said domain names system (12) corresponds to the TCP port 3389.

6. Apparatus according to any one of claims 1 to 5, wherein the listening port (30) of the remote control service (16) is not exposed to the Internet.
